(19) Europäisches Patentamt
European Patent Office
Office européen des brevets

(11) **EP 4 343 163 B1**

(12) **EUROPEAN PATENT SPECIFICATION**

(45) Date of publication and mention
of the grant of the patent:
**15.07.2026 Bulletin 2026/29**

(21) Application number: **22804777.5**

(22) Date of filing: **20.05.2022**

(51) International Patent Classification (IPC):
*F16C 19/36* (2006.01)     *F16C 33/46* (2006.01)
*F16C 33/56* (2006.01)     *F16C 43/04* (2006.01)
*F16C 33/50* (2006.01)

(52) Cooperative Patent Classification (CPC):
**F16C 33/502; F16C 19/364; F16C 33/506;**
**F16C 43/04;** F16C 33/4605; F16C 33/56;
F16C 43/065; F16C 2208/36; F16C 2300/14;
F16C 2360/31

(86) International application number:
**PCT/JP2022/020979**

(87) International publication number:
**WO 2022/244870 (24.11.2022 Gazette 2022/47)**

(54) **TAPERED ROLLER BEARING**

KEGELROLLENLAGER

PALIER DE ROULEMENT EFFILÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.05.2021 JP 2021085700**

(43) Date of publication of application:
**27.03.2024 Bulletin 2024/13**

(73) Proprietor: **NTN Corporation**
**Osaka-shi, Osaka 530-0005 (JP)**

(72) Inventors:
• **ITO Tomohito**
**Kuwana-shi, Mie 511-8678 (JP)**
• **HORI Michio**
**Kuwana-shi, Mie 511-8678 (JP)**
• **NISHIDA Yuta**
**Kuwana-shi, Mie 511-8678 (JP)**
• **INOUE Yasuyuki**
**Kuwana-shi, Mie 511-8678 (JP)**
• **FUKUDOME Shogo**
**Kuwana-shi, Mie 511-8678 (JP)**

(74) Representative: **Grünecker Patent- und**
**Rechtsanwälte**
**PartG mbB**
**Leopoldstraße 4**
**80802 München (DE)**

(56) References cited:
JP-A- 2011 149 549     JP-A- 2014 047 851
JP-A- 2015 117 767     JP-A- 2018 080 747
JP-A- 2018 080 747     US-A1- 2016 010 690
US-B2- 9 217 470

## Description

TECHNICAL FIELD

The present invention relates to a tapered roller bearing for use in a general industrial machinery, in particular, to a tapered roller bearing for rotatably supporting a large rotating shaft such as those with an outer diameter exceeding 1 m, such as a main shaft of a wind power generator.

BACKGROUND ART

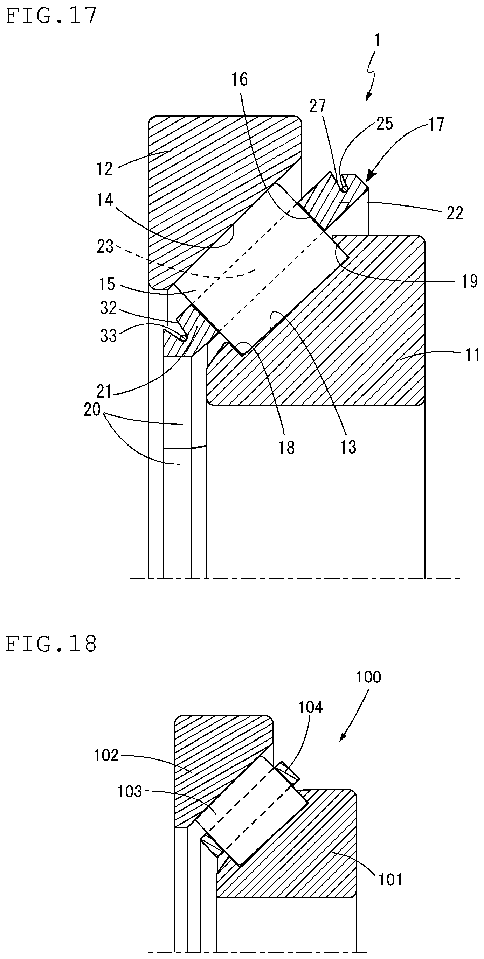

As illustrated in a sectional view of Fig. 18, a tapered roller bearing 100 is composed of an inner ring 101, an outer ring 102 concentrically arranged over an outer circumference of the inner ring, tapered rollers 103 disposed between the inner ring 101 and the outer ring 102, and a holder 104 holding the tapered rollers 103 in a circumference direction at a constant interval.

The holder 104 of the tapered roller bearing 100 is typically made of steel sheet. In the case of a large tapered roller bearing 100 such as those for use in a wind power generator, the tapered roller 103 is also large and a large number of rollers are used. Consequently, the holder 104 made of steel sheet may be deformed due to self-weight of the holder 104 or the weight of the tapered roller 103 that is being held. In addition, the holder 104 made of steel sheet is commonly produced through a pressing process. However, it will be difficult to achieve the process due to constraints on facilities for large bearings such as those with an outer diameter exceeding 1 m. In addition, while it is possible to ensure the strength of the holder 104 made of steel sheet by increasing the sheet thickness, it is generally difficult to achieve a pressing process for such a large component due to constraints on manufacturing facilities, and constraints on the process impose a limitation on the sheet thickness that is able to be processed by pressing. On the other hand, manufacturing the holder 104 by cutting will lead to a significant increase in costs and increased waste of material as compared with pressed products.

To solve the problems, there has been provided a segment holder in which the holder 104 is divided into a plurality of segments 104A as illustrated in Fig. 19, and the segments 104A are combined into a ring shape (Patent Document 1). Resin-made ones are the mainstream for such segment holders.

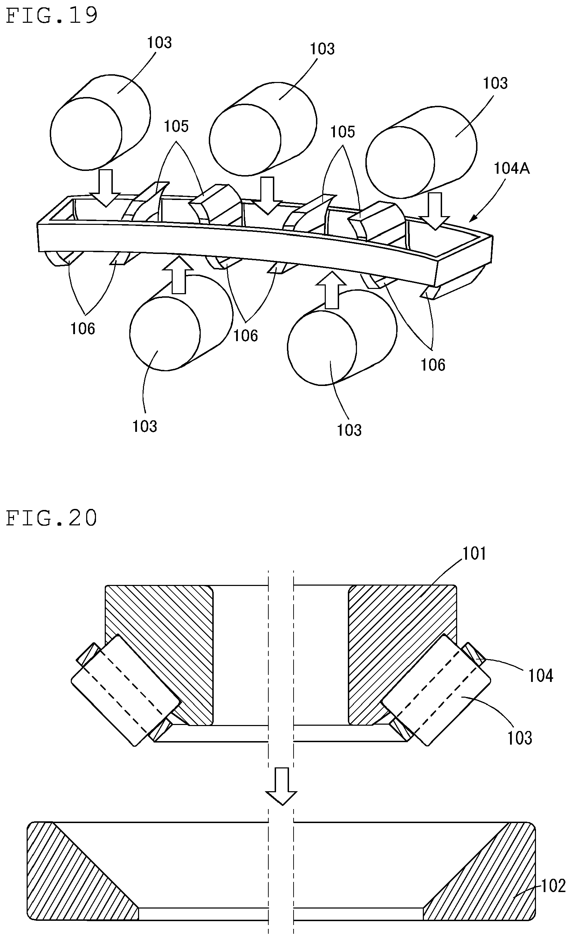

Incidentally, when a single row of tapered roller bearing 100 is to be incorporated in, for example, a wind turbine, as illustrated in Fig. 20, the inner ring 101, the tapered roller 103, and the holder 104 are previously put together and the put-together inner ring assembly is incorporated in the outer ring 102 in an upside-down state with a small-diameter side facing downward.

However, in the case of the segment holder in which a plurality of segments 104A are combined as illustrated in Fig. 19, the segments 104A will be broken up when the inner ring assembly is turned upside down. To prevent the segments 104A from being broken up, it has been proposed to connect the segments 104A arranged in a ring shape on an outer circumference thereof by a connecting member such as a wire to put together the segments 104A arranged in a ring shape (Patent Documents 2 to 4).

CITATION LIST

PATENT DOCUMENT

Patent Document 1: Japanese Patent No. 5010353

Patent Document 2: Japanese Patent Application Publication No. 2014-20393

Patent Document 3: Japanese Patent No. 5702534

Patent Document 4: Japanese Patent Application Publication No. 2018-80747

From document US 2016/010690 A1 it is known a roller bearing retainer which is constituted by two or a greater number of circumferentially disposed segments. Each segment includes: a plurality of columns provided between mutually opposing long sides of a rectangle; and a plurality of pockets for holding rollers between the columns. At least one of the mutually opposing long sides of the segment includes an arc-shaped connecting member having a generally U-shaped section for slidable fitting in a circumferential direction. The segments are arranged in the circumferential direction, and under this state, the connecting members of each segment is slid over the long side of the adjacent segment, whereby the segments are mutually connected with each other.
Further prior art is known from document US 9 217 470 B2 which discloses a tapered roller bearing comprising the features of the preamble portion of claim 1.

SUMMARY OF INVENTION

TECHNICAL PROBLEM

The prior-art segment holder illustrated in Fig. 19, in which segments 104A are combined, is of a rolling element guiding system, and is structured such that a pocket that includes an outer-diameter-side guide claw 105 in contact with the tapered roller 103 on an outer-diameter side and a pocket that includes an inner-diameter-side guide claw 106 in contact with the tapered roller 103 on an inner-diameter side are provided in a circumference direction in an alternating manner. The tapered rollers 103 are inserted in the pockets of the segments 104A from either the inner-diameter side or the outer-diameter side.

Accordingly, even though the segments 104A arranged in a ring shape are connected by a connecting member such as a wire to put together, when the inner ring assembly is turned upside down, the tapered rollers 103 inserted from the outer-diameter side may fall off because there are the guide claws 106 on the inner-diameter side, although the tapered roller 103 inserted from the inner-diameter side are prevented from falling off by the outer-diameter-side guide claws 105. Consequently, there is a problem of laboriousness of assembly.

In addition, even after the inner ring assembly is incorporated into the outer ring 102, if the connecting member such as a wire that puts together the segments is left intact, there is a possibility that the connecting member may come off when the tapered roller bearing 100 is in operation, leading to a failure.

Accordingly, the present invention aims to provide a tapered roller bearing, which ensures that segments of a segment holder will not be broken up nor further tapered rollers will not fall off from pockets of the segments even when an inner ring assembly is turned upside down when the inner ring assembly is to be incorporated in an outer ring, while a connecting member that puts together the segments can be removed after the inner ring assembly is incorporated into the outer ring.

SOLUTION TO PROBLEM

To attain the object described above, in a tapered roller bearing, the present invention includes the features of claim 1.

Ends of the connecting member may be connected together by a fastening portion provided on the connecting member itself or may be connected by a fastening member such as a turnbuckle and a cable tie.

Preferably, a wing portion protruding to a small-diameter side is provided on a small-diameter-side lateral-surface of the small-diameter-side arc-shaped portion, so that when the segments arranged in a ring shape is to be connected on a large-diameter side by the connecting member, a ring-shaped jig is fitted to the wing portion of the small-diameter side of the segments arranged in a ring shape.

Preferably, protruding portions with the engaging portion are provided on opposite end sides of the large-diameter-side lateral-surface of the large-diameter-side arc-shaped portion of each of the segments, and the fastening portion or the fastening member is arranged between the protruding portions on opposite end sides.

In a state in which a tapered roller is arranged on the raceway surface of the inner ring with a large end surface of the inner ring facing downward, when an angle of the large flange portion of the inner ring that is in contact with a large-diameter-side end surface of the tapered roller, with respect to a straight line that is perpendicular to a central axis of the inner ring is defined as I, a chamfered width of a leading edge of the large flange portion is defined as H, a distance from the central axis of the inner ring to a center of gravity of the tapered roller is defined as y1, and a diameter of the large flange portion is defined as J, the diameter of the large flange portion satisfies the condition below.

$$(J/2) - H \cos I > y1$$

In addition, when a plurality of segments are arranged with no gap in a circumference direction, there will be a gap between a segment arranged first and a segment arranged last. Here, at a room temperature, the size of the gap in a circumference direction is less than 0.12% of a circumference of a circle that passes through centers of the holder segments. The first segment refers to the segment that is arranged first when a plurality of segments are arranged successively in a circumference direction, and the last segment refers to the segment that is arranged last when the segments are arranged successively in a circumference direction such that adjacent segments are allowed to abut against each other. A plurality of holder segments extend in a circumference direction and incorporated into a tapered roller bearing to form one ring-shaped holder.

For the segment, resin-made one is used. A coefficient of linear expansion of the resin is $1.7 \times 10^{-5}/{}^{\circ}C$ or less.

For resin that forms segment, Poly Ether Ether Ketone that contains carbon fibers, glass fibers, or carbon black as a filler can be used. A fill ratio of the filler in the resin is set to 20 wt% or more and 40 wt% or less and the gap between the segments in a circumference direction is set in the range as described above, so that it is possible to prevent anomalies or the like in terms of strength encountered due to collision between the holder segments or deformation or the like due to bumping of the segments with one another in a circumference direction.

The connecting member may be divided into a plurality of connecting members, and ends of each of the divided connecting members may be connected together respectively by the fastening portions or the fastening members.

Preferably, a plurality of the fastening portions or the fastening member are arranged circumferentially in an evenly split manner. A small-diameter-side-connecting member and a small-diameter-side-engaging portion with the small-diameter-side-connecting member may be provided on the small-diameter-side lateral-surface of the small-diameter-side arc-shaped portion, and the segments arranged in a ring shape may be connected by removably engaging the small-diameter-side-connecting member with the small-diameter-side-engaging portion.

ADVANTAGEOUS EFFECTS OF INVENTION

In the tapered roller bearing according to the present invention, when the inner ring, the tapered rollers, and the holder are put together to form an inner ring assembly and the assembly is incorporated into the outer ring, even when an inner ring assembly is turned upside down, the segments will not be broken up because the segments arranged in a ring shape are connected on the large-diameter side by the connecting member.

In addition, since a guide claw is provided on the outer-diameter side of the columnar portion that forms the pocket of the segment and the tapered roller is inserted into the pocket from the inner-diameter side, the tapered roller will not fall off from the pocket even when the inner ring assembly is turned upside down.

When the segments arranged in a ring shape are to be connected on the large-diameter side by the connecting member, it is possible to prevent the segments from opening on the small-diameter side by fitting the ring-shaped jig into the wing portions of the segments arranged in a ring shape on the small-diameter side.

Ends of connecting member on the segments arranged in a ring shape are connected together on the large-diameter side by the fastening portion or the fastening member. Accordingly, removing the fastening portion or the fastening member after the inner ring assembly is incorporated into the outer ring allows the connecting member to be removed, so that it is possible to prevent the connecting member from coming off in operation, leading to a failure.

BRIEF DESCRIPTION OF DRAWINGS

Fig. 1 is a sectional view illustrating an embodiment of a tapered roller bearing according to the present invention.

Fig. 2 is a perspective view illustrating a segment of a segment holder for use in the tapered roller bearing of Fig. 1.

Fig. 3 is a sectional view illustrating tapered rollers inserted into the segment of Fig. 2.

Fig. 4 is a perspective view of the tapered roller bearing of Fig. 1 with an outer ring being removed.

Fig. 5 is a front view of the tapered roller bearing of Fig. 1 with the outer ring being removed.

Fig. 6 is a perspective view illustrating an assembling procedure of the tapered roller bearing of Fig. 1.

Fig. 7 is a perspective view of the assembling procedure of Fig. 6 as viewed from a different angle.

Fig. 8 is a schematic view illustrating a relationship between a tapered roller and a large flange portion of an inner ring when the tapered roller is arranged in the inner ring with a large end surface of the inner ring facing downward.

Fig. 9 is a perspective view illustrating the tapered roller bearing of Fig. 1 while being assembled.

Fig. 10 is a perspective view illustrating the tapered roller bearing of Fig. 1 while being assembled.

Fig. 11 is a sectional view of Fig. 10.

Fig. 12 is a sectional view with the ring-shaped jig being removed from the state in Fig. 10.

Fig. 13 is a sectional view illustrating the inner ring assembly being turned upside down to be incorporated into the outer ring.

Fig. 14 is a sectional view illustrating the inner ring assembly incorporated into the outer ring.

Fig. 15 is a schematic view illustrating a rotating state of the tapered roller arranged on a raceway surface of the inner ring.

Fig. 16 is a schematic view illustrating a relationship between the height of a small flange portion of the inner ring and the tapered roller when the tapered roller arranged on the raceway surface of the inner ring is rotated.

Fig. 17 is a sectional view illustrating another embodiment of the tapered roller bearing according to the present invention.

Fig. 18 is a sectional view of a prior-art tapered roller bearing.

Fig. 19 is a perspective view illustrating tapered rollers being inserted into segments that form holder segment for use in the prior-art tapered roller bearing.

Fig. 20 is a sectional view illustrating an assembling procedure of the prior-art tapered roller bearing.

DESCRIPTION OF EMBODIMENTS

An embodiment of the present invention will now be described based on attached drawings.

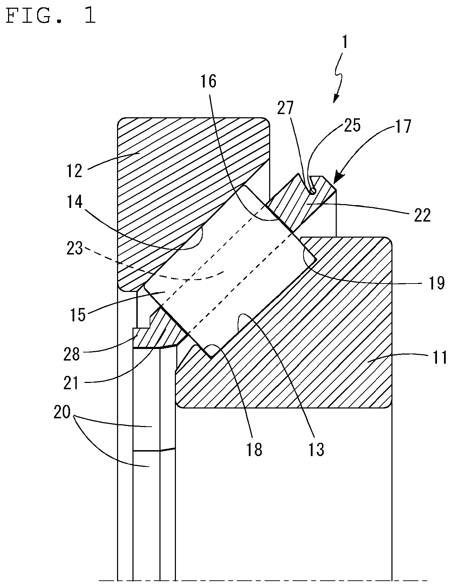

As illustrated in Fig. 1, a tapered roller bearing 1 according to the embodiment includes an inner ring 11, an outer ring 12 concentrically arranged over an outer circumference of the inner ring 11, a plurality of tapered rollers 15 arranged between the inner ring 11 and the outer ring 12, and a holder 17 including a pocket 16 that holds a tapered roller 15 at a constant interval.

The outer ring 12 has a raceway surface 14 on which the tapered rollers 15 roll on the inner circumference.

The inner ring 11 has a raceway surface 13 on which tapered rollers 15 roll on the outer circumference, and a large flange portion 19 and a small flange portion 18 that are on opposite sides in the axial direction across the raceway surface 13 and that come into contact with end surfaces of the tapered rollers 15.

In the case of a large tapered roller bearing 1 used to support a main shaft or the like for wind power generation, an average diameter of the tapered roller 15 is 40 mm or larger and outer diameter of the bearing is 1 m or larger.

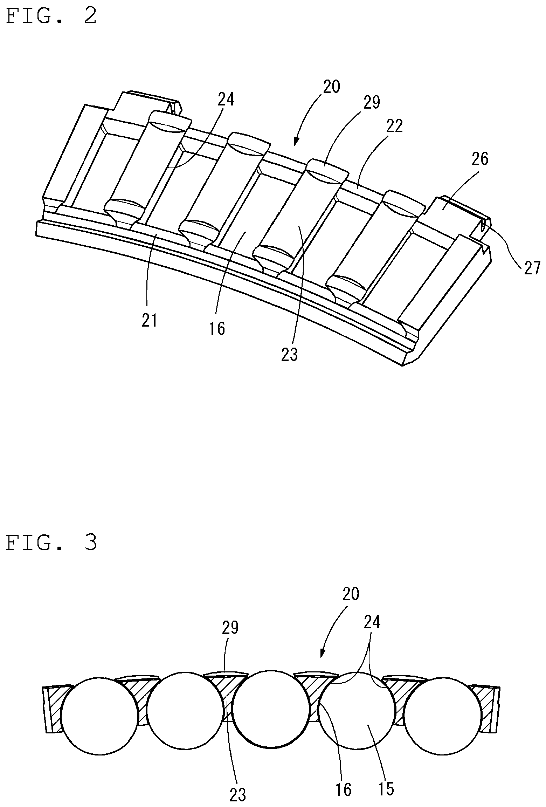

The holder 17 is a segment holder formed from a plurality of segments 20 as illustrated in Fig. 2.

As illustrated in Fig. 2, the segment 20 has an opposing pair of a small-diameter-side arc-shaped portion 21 and a large-diameter-side arc-shaped portion 22 spaced apart at a predetermined interval, and a plurality of columnar portions 23 extending between the small-diameter-side arc-shaped portion 21 and the large-diameter-side arc-shaped portion 22. A space surrounded by two adjacent columnar portions 23, the small-diameter-side arc-shaped portion 21, and the large-diameter-side arc-shaped portion 22 is defined as a pocket 16 for containing the tapered roller 15.

In the embodiment, six columnar portions 23 are provided in one segment 20, and five pockets 16 for containing the tapered roller 15 are provided between two adjacent columnar portions 23.

As illustrated in Fig. 3, on the outer-diameter side of each of opposing surfaces of two adjacent columnar portions 23 that form each pocket 16, a guide claw 24 is provided for preventing the tapered roller 15 inserted into the pocket 16 from slipping out to the outer-diameter side.

In addition, the holder 17 formed by arranging the segments 20 in a ring shape is of an outer ring guiding system, and is provided with arcuate guide projections 29 on opposite end outer surfaces in the axial direction of the columnar portion 23. The guide projections 29 may be provided on only some of columnar portions 23 including columnar portions 23 on opposite ends of the segments 20.

The segments 20 are arranged in a ring shape with end surfaces of the small-diameter-side arc-shaped portion 21 and the large-diameter-side arc-shaped portion 22 being butted together.

On opposite end sides of the large-diameter-side lateral-surface of the large-diameter-side arc-shaped portion 22 of the segment 20, protruding portions 26 are provided so as to protrude in the axial direction, and the protruding portions 26 each have an engaging portion 27 for a connecting member 25 to be arranged on the large-diameter side of the segments 20 arranged in a ring shape. Preferably, the protruding portions 26 located on opposite end sides of the large-diameter-side lateral-surface of the large-diameter-side arc-shaped portion 22 of the segment 20 are provided such that contact is avoided between the protruding portions 26 of adjacent segments 20.

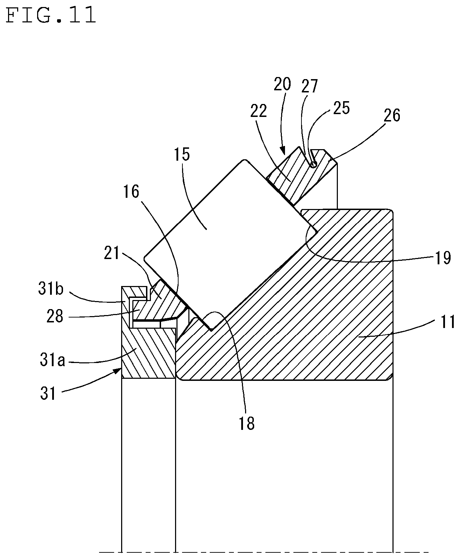

As illustrated in Fig. 11, the ring-shaped jig 31 is formed from a ring portion 31a that abuts against the end surface on the small-diameter side of the inner ring 11 and an L-shaped engaging portion 31b provided so as to protrude toward the outer-diameter side from an end of ring portion 31a in the axial direction, so that the L-shaped engaging portion 31b is fitted into the wing portion 28 of the segment 20 with the ring portion 31a abutting against the end surface on the small-diameter side of the inner ring 11.

The connecting member 25, which is to be wound around on the large-diameter side of the segment 20, is to be fastened by a fastening member 30 such as a turnbuckle. When being formed from a turnbuckle, the fastening member 30 has a body that has an internal thread portion. Ends of connecting member 25 can be connected together by screwing an external thread portion provided on an end of the connecting member 25 into the body of the turnbuckle. Rotating the body can impart a tension on the connecting member 25, and rotating the body in the opposite direction to the tightening direction allows the opposite ends of the connecting member 25 to be unfastened. Note that for connecting the ends of the connecting member 25 together, the ends of the connecting member 25 may be wound together by providing fastening portions on the ends of the connecting member 25, or may be connected by using a cable tie.

A wire or a belt can be used as the connecting member 25. When a wire is used as the connecting member 25, a removable hook or a turnbuckle can be used as the fastening member 30. A turnbuckle is the most preferable because it is removable, the tightening force will not decrease, and the tightening force is adjustable. When a belt is used as the connecting member 25, it is preferable to use a removable buckle as the fastening member 30 because the tightening force will not decrease.

The segment 20 is made of resin or steel. Carbon fiber-containing Poly Ether Ether Ketone or glass fiber-containing Poly Ether Ether Ketone can be used as resin that forms the segment 20.

Assembly of the tapered roller bearing 1 that uses the segment 20 is performed as described below.

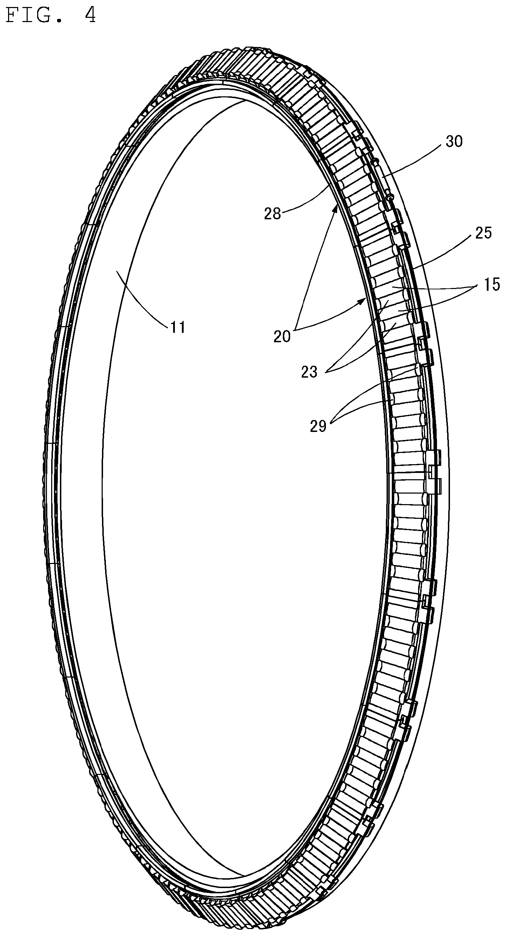

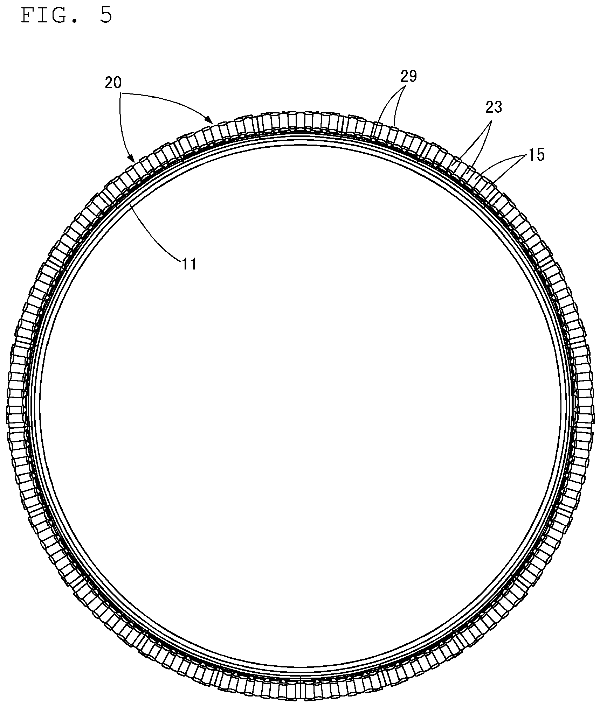

First, before being incorporated into the outer ring 12, the inner ring assembly, in which the inner ring 11, the tapered rollers 15, and the holder 17 are put together, is assembled as illustrated in Figs. 4 and 5.

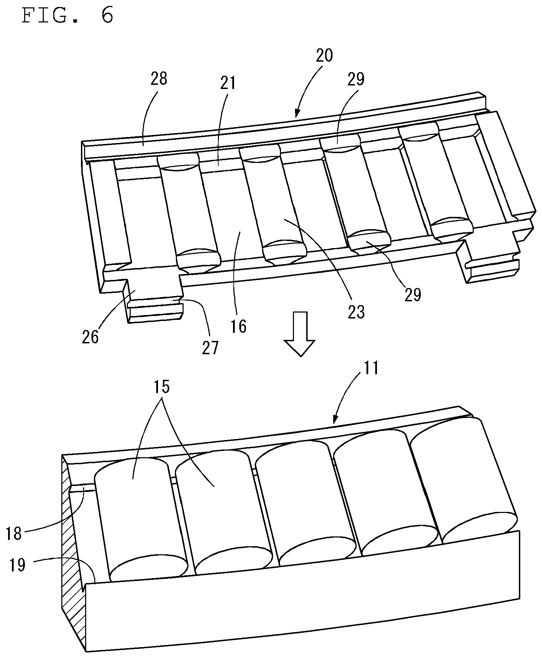

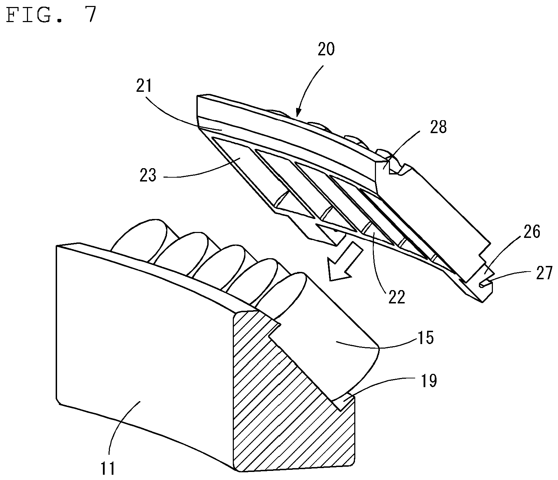

To assemble the inner ring assembly, the tapered rollers 15 are first arranged on the raceway surface 13 of the inner ring 11 with the large end surface of the inner ring 11 facing downward, as illustrated in Figs. 6 and 7.

As arrangement of the tapered rollers 15 on the raceway surface 13 proceeds with the large end surface of the inner ring 11 facing downward, there is a possibility that the tapered rollers 15 fall off from the inner ring 11 due to self-weight. To prevent the tapered rollers 15 from falling off from the inner ring 11, the distance from the central axis of the inner ring 11 to the leading edge of the large flange portion 19 is set larger than the distance from the central axis of the inner ring 11 to the center of gravity of a tapered roller 15, and diameter J of the large flange portion 19 satisfies the formula below.

$$(J/2) - H \cos I > y1$$

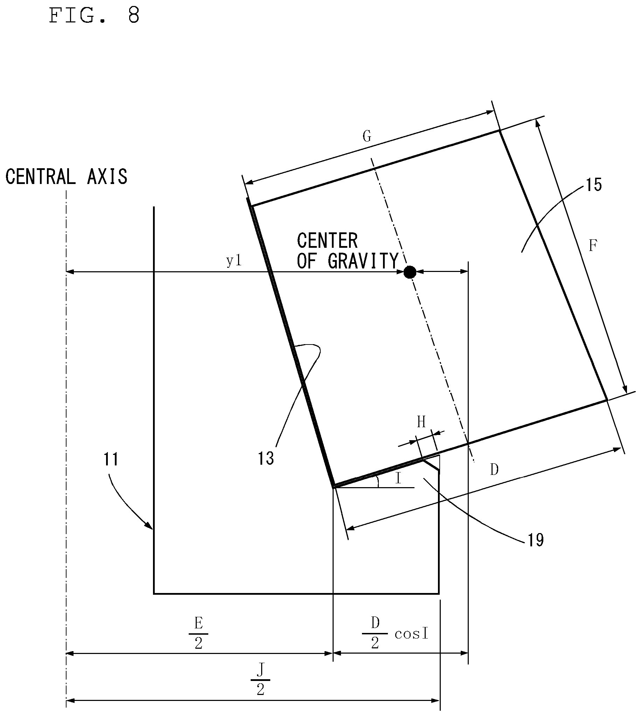

Specifically, as illustrated in Fig. 8, with the large end surface of the inner ring 11 facing downward and with the tapered roller 15 being arranged on the raceway surface 13 of the inner ring 11, when an angle of the large flange portion 19 of the inner ring 11 that is in contact with the side surface of the tapered roller 15 with respect to a straight line that is perpendicular to a central axis of the inner ring 11 is defined as I, a chamfered width of the leading edge of the large flange portion 19 is defined as H, a distance from the central axis of the inner ring 11 to the center of gravity of the tapered roller 15 is defined as y1, and a diameter of the large flange portion 19 is defined as J, it is possible to prevent the tapered roller 15 from falling off when the formula described above is satisfied. Note that, in Fig. 8, D denotes the diameter of the large end surface of the tapered roller 15, G denotes the diameter of the small end surface of the tapered roller 15, F denotes the length of the tapered roller 15, and E denotes the distance from the central axis to the end of the raceway surface 13 on the large flange portion 19 side.

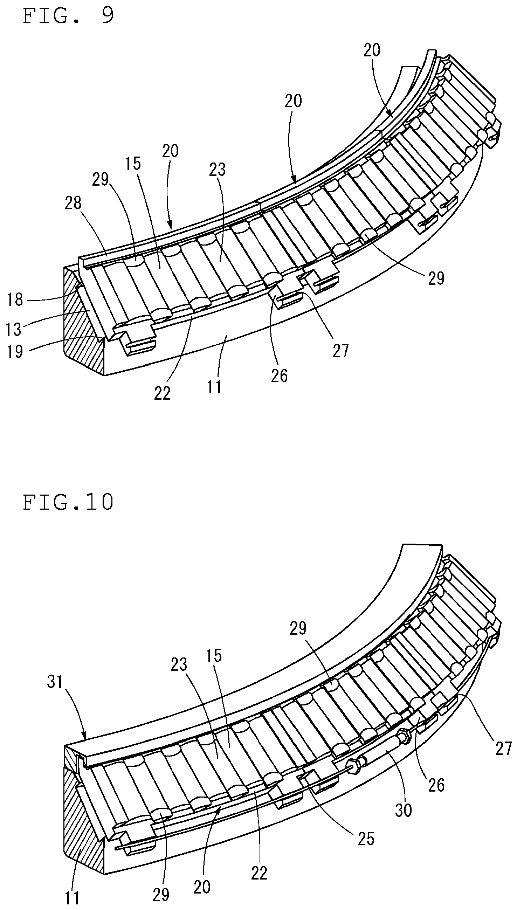

After the tapered rollers 15 are arranged on the raceway surface 13 of the inner ring 11, putting over the segments 20 successively from the outer-diameter side allows the tapered rollers 15 to be inserted into the pockets 16 from the inner-diameter side of the segments 20, as illustrated in Fig. 9.

Thereafter, as illustrated in Fig. 10, the ring-shaped jig 31 is fitted into the wing portions 28 that protrude on the small-diameter-side lateral-surfaces of the segments 20 arranged in a ring shape, the connecting member 25 is made to pass through the engaging portions 27 of the protruding portions 26 that protrude on the large-diameter-side lateral-surfaces, ends of the connecting member 25 wound around on the outer-diameter side of the segments 20 are fastened together by the fastening member 30, and the connecting member 25 is tightened by the fastening member 30, so that a plurality of segments 20 arranged in a ring shape are put together.

The fastening member 30 is located between the protruding portions 26 that protrude to opposite end sides of the large-diameter-side lateral-surface of the large-diameter-side arc-shaped portion 22, the area between the protruding portions 26 on opposite end sides serving as a receiving portion for the fastening member 30.

Although may be a single body that continues in a circumference direction, the connecting member 25 may be divided into a plurality of connecting members 25 in a circumference direction and ends of the divided connecting members 25 may be connected together by the fastening members 30, respectively. When the connecting member 25 is divided into a plurality of connecting members 25, the fastening members 30 are preferably arranged circumferentially in an evenly split manner.

When the connecting member 25 is wound around the outer circumference of the segments 20 arranged in a ring shape and the connecting member 25 is tightened by the fastening member 30, the segments 20 arranged in a ring shape tend to open on the small-diameter side. To inhibit the opening, the ring-shaped jig 31 is fitted into the wing portions 28 on the small-diameter side of the segments 20 arranged in a ring shape when the connecting member 25 is to be tightened.

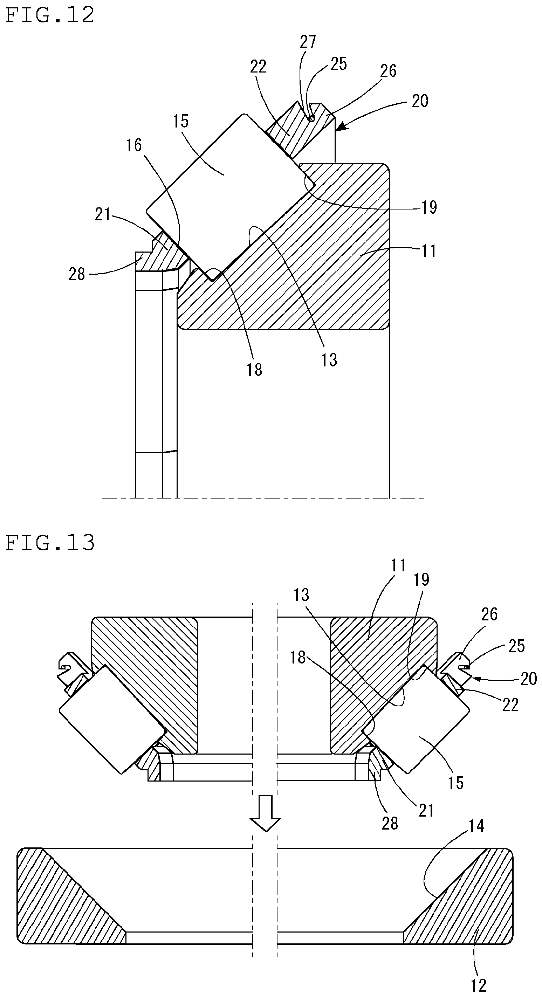

As illustrated in Fig. 11, the ring-shaped jig 31 is adapted such that it is put over, in the axial direction, the wing portions 28 of the small-diameter-side arc-shaped portion 21 of the segments 20 arranged in a ring shape, and after the inner ring assembly is assembled, can be removed by moving it along the central axis (Fig. 12).

Next, the inner ring assembly is incorporated into the outer ring 12 in an upside-down state with the small-diameter side of the inner ring assembly facing downward, as illustrated in Fig. 13.

When the inner ring assembly is to be incorporated into the outer ring 12, even when the inner ring assembly is turned into an upside-down state with the small-diameter side facing downward, the segments 20 will not be broken up because the segments 20 arranged in a ring shape are connected by the connecting member 25 on the outer circumference side.

In addition, the tapered rollers 15 inserted into the pockets 16 of the segments 20 will not slipped out of the pockets 16 by the guide claws 24 provided on the outer-diameter side on the columnar portions 23 that form the pockets 16.

The ring-shaped jig 31 used when the inner ring assembly is assembled is removed during incorporation into the outer ring 12.

Even when the inner ring assembly is turned into an upside-down state with the small-diameter side facing downward with the ring-shaped jig 31 being removed, in the segments 20, which are connected by the connecting member 25, the tapered rollers 15 inserted and retained in the pockets 16 of the segments 20 are fitted between the large flange portion 19 and the small flange portion 18 that are located on axially opposite sides of the raceway surface 13 of the inner ring 11, so that the tapered rollers 15 are hooked on the small flange portion 18 of the inner ring 11. Consequently, the segments 20 are prevented from falling off.

The height of the small flange portion 18 of the inner ring 11 to prevent the segments 20 from falling off satisfies the conditions below.

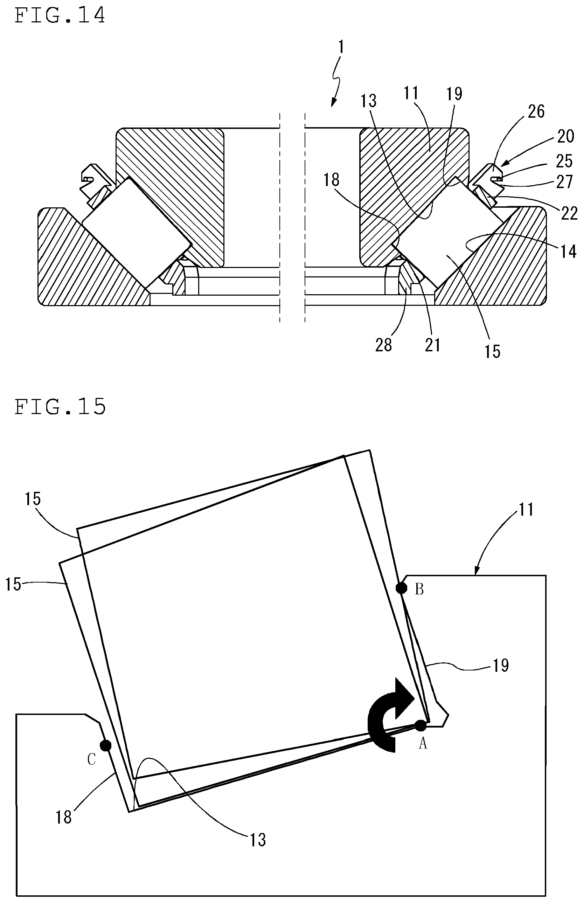

When the tapered roller 15 fitted between the large flange portion 19 and the small flange portion 18 of the inner ring 11 rotates, it is conceivable that it rotates about a point A when the large end surface of the tapered roller 15 is not in contact with the large flange portion 19 as illustrated in a schematic view of Fig. 15, and it rotates about a point B when the large end surface of the tapered roller 15 is in contact with the large flange portion 19.

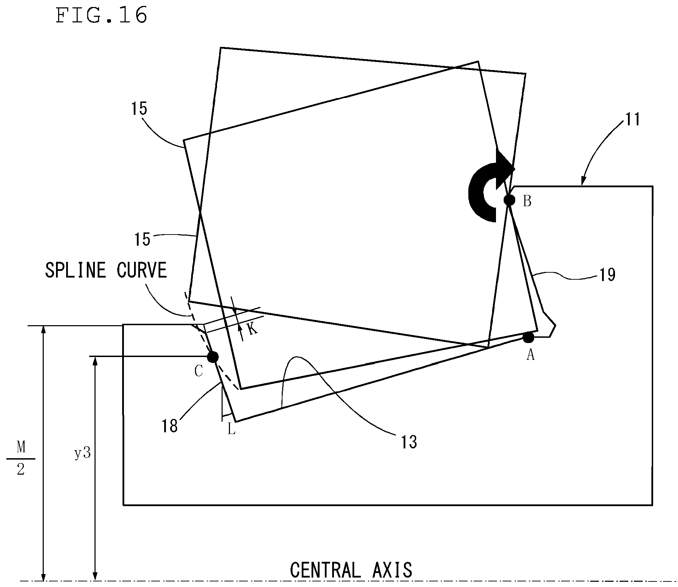

When the large end surface of the tapered roller 15 is in contact with the large flange portion 19 and rotation occurs about the point B, as illustrated in a schematic view of Fig. 16, assuming that the diameter M of the small flange portion 18 of the inner ring 11 is sufficiently large, the end surface on the small-diameter side of the tapered roller 15 comes into contact with a point C on the side surface of the small flange portion 18. Consequently, the rotation of the tapered roller 15 is inhibited, and the tapered roller 15 is hooked on the small flange portion 18 of the inner ring 11.

The point C on the side surface of the small flange portion 18 at which the tapered roller 15 is hooked is an intersection of a spline curve drawn by a locus of a small end surface corner of the tapered roller 15 when the tapered roller 15 rotates, with the side surface of the small flange portion 18, as illustrated in Fig. 16. At this time, the diameter M of the small flange portion 18 of the inner ring 11 satisfies the condition below.

$$(M/2) - K \cos L > y3$$

Here, the diameter of the small flange portion 18 of the inner ring 11 is defined as M, an angle of the side surface on the point C side of the small flange portion 18 of the inner ring 11 with respect to a straight line that is perpendicular to a central axis of the inner ring 11 is defined as L, a chamfered width of the leading edge of the small flange portion 18 is defined as K, and a distance, to the central axis, from the contact point C at which the side surface of the small flange portion 18 comes into contact with the end surface of the small-diameter side of the tapered roller 15 when the tapered roller 15 is rotated about the point B on the leading edge of the large flange portion 19 of the inner ring 11 is defined as y3.

As described above, the inner ring assembly is turned upside down such that the small-diameter side faces downward and incorporated into the outer ring 12, so that the tapered roller bearing 1 can be assembled as illustrated in Fig. 14.

As illustrated in Fig. 14, once the assembly of the tapered roller bearing 1 is completed, the segments 20 will not be broken up even after the fastening member 30 is loosened and the connecting member 25 that tightens the outer circumference of the segments 20 is removed. Accordingly, after the tapered roller bearing 1 is incorporated into a generator, the connecting member 25 can be kept removed.

In the embodiment described above, there are provided the wing portions 28 protruding to the small-diameter side on the small-diameter-side lateral-surface of the small-diameter-side arc-shaped portion 21, and the ring-shaped jig 31 is fitted into the wing portions on the small-diameter side of the segments 20 arranged in a ring shape when the segments 20 arranged in a ring shape is to be fastened on the large-diameter side by the connecting member 25. However, as an embodiment illustrated in Fig. 17, a small-diameter-side-engaging portion 32 may be provided on the small-diameter-side lateral-surface of the small-diameter-side arc-shaped portion 21, and a connecting member 33, which is wound around on the small-diameter side of the segments arranged in a ring shape, may be made to pass through the small-diameter-side-engaging portion 32 and ends of the connecting member 33 may be removably fastened together by a fastening member (not illustrated), so that the ring-shaped jig 31 may be eliminated.

Although embodiments of the present invention have been described above with reference to drawings, the present invention is not limited to those of the illustrated embodiments. The invention is defined by the appended claims.

REFERENCE SIGNS LIST

1: tapered roller bearing
11: inner ring
12: outer ring
13: raceway surface
14: raceway surface
15: tapered roller
16: pocket
17: holder
18: small flange portion
19: large flange portion
20: segment
21: small-diameter-side arc-shaped portion
22: large-diameter-side arc-shaped portion
23: columnar portion
24: guide claw
25: connecting member
26: protruding portion
27: engaging portion
28: wing portion
29: guide projection
30: fastening portion or fastening member
31: ring-shaped jig
32: small-diameter-side-engaging portion
33: connecting member

**Claims**

1. A tapered roller bearing (1) comprising: an inner ring (11); an outer ring (12) concentrically arranged over an outer circumference of the inner ring (11); a plurality of tapered rollers (15) arranged between the inner ring (11) and the outer ring (12); and a holder (17) including pockets (16) that hold tapered rollers (15) at a constant interval, wherein the inner ring (11) has: a raceway surface (14) on the outer circumference on which the tapered rollers (15) roll; and a large flange portion (19) and a small flange portion (18) that are on opposite sides in an axial direction across the raceway surface (14) and that come into contact with end surfaces of the tapered rollers (15), the holder (17) is a segment holder divided into a plurality of segments (20) in a circumference direction, the segments (20) each have: an opposing pair of a small-diameter-side arc-shaped portion (21) and a large-diameter-side arc-shaped portion (22) spaced apart at a predetermined interval; and a plurality of columnar portions (23) extending between the small-diameter-side arc-shaped portion (21) and the large-diameter-side arc-shaped portion (22), a space surrounded by two adjacent columnar portions (23), the small-diameter-side arc-shaped portion (21), and the large-diameter-side arc-shaped portion (22) is defined as each of the pockets (16) for containing the tapered roller (15), and wherein the inner ring (11), the tapered rollers (15), and the holder (17) are put together to form an inner ring assembly, which is incorporated into the outer ring (12),

wherein a guide claw (24) is provided on an outer-diameter side of each of adjacent columnar portions (23) of each of the pockets (16) to allow the tapered rollers (15) to be inserted into the pockets (16) from an inner-diameter side of the segments (20), the tapered roller bearing (1) has a connecting member (25) to be arranged in a ring shape on a large-diameter-side lateral-surface of each of the segments (20), and an engaging portion (27) for removably engaging the connecting member (25) is provided on the large-diameter-side lateral-surface of the large-diameter-side arc-shaped portion (22) of each of the segments (20) to connect the segments (20), **characterized in that** in a state in which adjacent segments (20) are butted together and fixed by connecting the connecting member (25), when a diameter of the small flange portion (18) of the inner ring (11) is defined as M, an angle of the small flange portion (18) of the inner ring (11) that is in contact with an end surface of a tapered roller (15) on the small-diameter side, with respect to a straight line that is perpendicular to a central axis of the inner ring (11) is defined as L, a chamfered width of a leading edge of the small flange portion (18) is defined as K, and a distance, to the central axis, from a contact point C at which a side surface of the small flange portion (18) comes into contact with an end surface of the tapered roller (15) on the small-diameter side when the tapered roller (15) is rotated around a leading edge of the large flange portion (H) of the inner ring (11) is defined as y3, the condition below is satisfied.

$$(M/2) - K \cos L > y3$$

2. The tapered roller bearing (1) according to claim 1, wherein ends of the connecting member (25) are connected together by a fastening portion or fastening member (30).

3. The tapered roller bearing (1) according to claim 1 or 2, wherein a wing portion (28) protruding to a small-diameter side is provided on a small-diameter-side lateral-surface of the small-diameter-side arc-shaped portion (21), so that when the segments (20) arranged in a ring shape is to be connected on a large-diameter side by the connecting member (25), a ring-shaped jig (31) is fitted to the wing portion (28) of the small-diameter side of the segments (20) arranged in a ring shape.

4. The tapered roller bearing (1) according to any of claims 1 to 3, wherein protruding portions (26) with the engaging portion (27) are provided on opposite end sides of the large-diameter-side lateral-surface of the large-diameter-side arc-shaped portion (22) of each of the segments (20).

5. The tapered roller bearing (1) according to any of claims 1 to 4, wherein in a state in which a tapered roller (15) is arranged on the raceway surface (14) of the inner ring (11) with a large end surface of the inner ring (11) facing downward, when an angle of the large flange portion (19) of the inner ring (11) that is in contact with an end surface of the tapered roller (15) on the large-diameter side, with respect to a straight line that is perpendicular to a central axis of the inner ring (11) is defined as I, a chamfered width of a leading edge of the large flange portion (19) is defined as H, a distance from the central axis of the inner ring (11) to a center of gravity of the tapered roller (15) is defined as y1, and a diameter of the large flange portion (19) is defined as J, the condition below is satisfied.

$$(J/2) - H \cos I > y1$$

6. The tapered roller bearing (1) according to any of claims 1 to 5, wherein the segments (20) are made of resin.

7. The tapered roller bearing (1) according to claim 6, wherein resin that forms the segment (20) is carbon fiber-containing Poly Ether Ether Ketone or glass fiber-containing Poly Ether Ether Ketone.

8. The tapered roller bearing (1) according to claim 2, wherein the connecting member (25) is divided into a plurality of connecting members (25), and ends of each of the divided connecting members (25) are connected together respectively by the fastening portions or the fastening members (30).

9. The tapered roller bearing (1) according to claim 8, wherein a plurality of the fastening portions or the fastening members (30) are arranged circumferentially in an evenly split manner.

10. The tapered roller bearing (1) according to any of claims 1 to 9, wherein a small-diameter-side-connecting member and a small-diameter-side-engaging portion (32) with the small-diameter-side-connecting member are provided on the small-diameter-side lateral-surface of the small-diameter-side arc-shaped portion (21), and the segments (20) arranged in a ring shape are connected by removably engaging the small-diameter-side-connecting member with the small-diameter-side-engaging portion (32).

**Patentansprüche**

1. Ein Kegelrollenlager (1), umfassend: einen Innenring (11); einen Außenring (12), der konzentrisch über einem Außenumfang des Innenrings (11) angeordnet ist; eine Vielzahl von Kegelrollen (15), die zwischen dem Innenring (11) und dem Außenring (12) angeordnet sind; und einen Halter (17), der Taschen (16) enthält, die die Kegelrollen (15) in einem konstanten Abstand halten, wobei der Innenring (11) Folgendes aufweist: eine Laufbahnoberfläche (14) auf dem Außenumfang, auf der die Kegelrollen (15) rollen; und einen großen Flankenabschnitt (19) und einen kleinen Flankenabschnitt (18), die sich auf gegenüberliegenden Seiten in einer axialen Richtung über die Laufbahnoberfläche (14) befinden und die in Kontakt mit Endoberflächen der Kegelrollen (15) kommen, wobei der Halter (17) ein Segmenthalter ist, der in eine Vielzahl von Segmenten (20) in einer Umfangsrichtung unterteilt ist, wobei die Segmente (20) jeweils aufweisen: ein gegenüberliegendes Paar aus einem bogenförmigen Abschnitt (21) mit kleinem Durchmesser und einem bogenförmigen Abschnitt (22) mit großem Durchmesser, die in einem vorbestimmten Abstand voneinander angeordnet sind; und eine Vielzahl von säulenförmigen Abschnitten (23), die sich zwischen dem bogenförmigen Abschnitt (21) auf der Seite des kleinen Durchmessers und dem bogenförmigen Abschnitt (22) auf der Seite des großen Durchmessers erstrecken, einen Zwischenraum, der von zwei benachbarten säulenförmigen Abschnitten (23) umgeben ist, den bogenförmigen Abschnitt (21) auf der Seite des kleinen Durchmessers, und dem bogenförmigen Abschnitt (22) auf der Seite des großen Durchmessers als jede der Taschen (16) zur Aufnahme der Kegelrolle (15) definiert ist, und wobei der Innenring (11), die Kegelrollen (15) und der Halter (17) zusammengesetzt sind, um eine Innenringbaugruppe zu bilden, die in den Außenring (12) eingebaut ist,

wobei eine Führungsklaue (24) an einer Außendurchmesserseite jedes der benachbarten säulenförmigen Abschnitte (23) jeder der Taschen (16) vorgesehen ist, um den Einsatz der Kegelrollen (15) in die Taschen (16) von einer Innendurchmesserseite der Segmente (20) zu ermöglichen, das Kegelrollenlager (1) ein Verbindungselement (25) aufweist, das ringförmig an einer großdurchmesserseitigen Seitenfläche jedes der Segmente (20) anzuordnen ist, und ein Eingriffsabschnitt (27) zum abnehmbaren Eingriff mit dem Verbindungselement (25) an der großdurchmesserseitigen Seitenfläche des großdurchmesserseitigen bogenförmigen Abschnitts (22) jedes der Segmente (20) vorgesehen ist, um die Segmente (20) zu verbinden, **dadurch gekennzeichnet, dass** in einem Zustand, in dem benachbarte Segmente (20) aneinander gestoßen und durch Verbinden des Verbindungselements (25) fixiert sind, wenn ein Durchmesser des kleinen Flankenabschnitts (18) des Innenrings (11) als M definiert ist, ein Winkel des kleinen Flankenabschnitts (18) des Innenrings (11), der mit einer Endfläche einer Kegelrolle (15) auf der Seite des kleinen Durchmessers in Kontakt ist, in Bezug auf eine gerade Linie, die senkrecht zu einer Mittelachse des Innenrings (11) ist, als L definiert ist, eine abgeschrägte Breite einer Vorderkante des kleinen Flankenabschnitts (18) als K definiert ist, und ein Abstand zur Mittelachse von einem Kontaktpunkt C, an dem eine Seitenfläche des kleinen Flankenabschnitts (18) mit einer Endfläche der Kegelrolle (15) auf der Seite mit kleinem Durchmesser in Kontakt kommt, wenn die Kegelrolle (15) um eine Vorderkante des großen Flankenabschnitts (H) des Innenrings (11) rotiert wird, als y3 definiert ist, die folgende Bedingung erfüllt ist.

$$(M/2) - K \cos L > y3$$

2. Das Kegelrollenlager (1) nach Anspruch 1, wobei die Enden des Verbindungselements (25) durch einen Befestigungsabschnitt oder ein Befestigungselement (30) miteinander verbunden sind.

3. Das Kegelrollenlager (1) nach Anspruch 1 oder 2, wobei an einer kleindurchmesserseitigen Seitenfläche des kleindurchmesserseitigen bogenförmigen Abschnitts (21) ein zu einer Kleindurchmesserseite vorstehender Flügelabschnitt (28) vorgesehen ist, so dass, wenn die ringförmig angeordneten Segmente (20) an einer Großdurchmesserseite durch das Verbindungselement (25) zu verbinden sind, eine ringförmige Vorrichtung (31) an dem Flügelabschnitt (28) der Kleindurchmesserseite der ringförmig angeordneten Segmente (20) angebracht ist.

4. Das Kegelrollenlager (1) nach einem der Ansprüche 1 bis 3, wobei an gegenüberliegenden Stirnseiten der großdurchmesserseitigen Mantelfläche des großdurchmesserseitigen bogenförmigen Abschnitts (22) jedes der Segmente (20) vorspringende Abschnitte (26) mit dem Eingriffsabschnitt (27) vorgesehen sind.

5. Das Kegelrollenlager (1) nach einem der Ansprüche 1 bis 4, wobei in einem Zustand, in dem eine Kegelrolle (15) auf der Laufbahnoberfläche (14) des Innenrings (11) mit einer großen Endfläche des Innenrings (11) nach unten weisend angeordnet ist, wenn ein Winkel des großen Flanschabschnitts (19) des Innenrings (11), der in Kontakt mit einer Endfläche der Kegelrolle (15) auf der Seite des großen Durchmessers ist, bezüglich einer Geraden, die senkrecht zu einer Mittelachse des Innenrings (11) verläuft, als I definiert ist, eine abgeschrägte Breite einer Vorderkante des großen Flankenabschnitts (19) als H definiert ist, ein Abstand von der Mittelachse des Innenrings (11) zu einem Schwerpunkt der Kegelrolle (15) als y1 definiert ist und ein Durchmesser des großen Flankenabschnitts (19) als J definiert ist, ist die folgende Bedingung erfüllt.

$$(J/2) - H \cos I > y1$$

6. Das Kegelrollenlager (1) nach einem der Ansprüche 1 bis 5, wobei die Segmente (20) aus Harz bestehen.

7. Das Kegelrollenlager (1) nach Anspruch 6, wobei das Harz, das das Segment (20) bildet, kohlenstofffaserhaltiges Polyetheretherketon oder glasfaserhaltiges Polyetheretherketon ist.

8. Das Kegelrollenlager (1) nach Anspruch 2, wobei das Verbindungselement (25) in eine Vielzahl von Verbindungselementen (25) unterteilt ist, und die Enden jedes der unterteilten Verbindungselemente (25) jeweils durch die Befestigungsabschnitte oder die Befestigungselemente (30) miteinander verbunden sind.

9. Das Kegelrollenlager (1) nach Anspruch 8, wobei eine Vielzahl der Befestigungsabschnitte oder der Befestigungselemente (30) in Umfangsrichtung gleichmäßig geteilt angeordnet sind.

10. Das Kegelrollenlager (1) nach einem der Ansprüche 1 bis 9, wobei an der kleindurchmesserseitigen Seitenfläche des kleindurchmesserseitigen bogenförmigen Abschnitts (21) ein kleindurchmesserseitiges Verbindungselement und ein kleindurchmesserseitiger Eingriffsabschnitt (32) mit dem kleindurchmesserseitigen Verbindungselement vorgesehen sind, und die in einer Ringform angeordneten Segmente (20) durch abnehmbaren Eingriff des durchmesserseitigen Verbindungselements mit dem kleindurchmesserseitigen Eingriffsabschnitt (32) verbunden sind.

**Revendications**

1. Palier à rouleaux effilés (1) comprenant : une bague intérieure (11) ; une bague extérieure (12) disposée de manière concentrique au-dessus d'une circonférence extérieure de la bague intérieure (11) ; une pluralité de rouleaux effilés (15) disposés entre la bague intérieure (11) et la bague extérieure (12) ; et une cage (17) comportant des poches (16) qui maintiennent les rouleaux effilés (15) à intervalle constant, dans lequel la bague intérieure (11) comporte : une surface de roulement (14) sur la circonférence extérieure sur laquelle roulent les rouleaux effilés (15) ; et une grande partie d'épaulement (19) et une petite partie d'épaulement (18) qui sont sur des côtés opposés dans une direction axiale de part et d'autre de la surface de roulement (14) et qui viennent en contact avec des surfaces d'extrémité des rouleaux effilés (15), la cage (17) est une cage à segments divisée en une pluralité de segments (20) dans une direction circonférentielle, les segments (20) possèdent chacun : une paire constituée d'une partie en forme d'arc d'un côté de petit diamètre (21) et d'une partie en forme d'arc d'un côté de grand diamètre (22) opposées espacées suivant un intervalle prédéterminé ; et une pluralité de parties en colonnes (23) s'étendant entre la partie en forme d'arc du côté de petit diamètre (21) et la partie en forme d'arc du côté de grand diamètre (22), un espace entouré par deux parties en colonnes (23) adjacentes, la partie en forme d'arc du côté de petit diamètre (21) et la partie en forme d'arc du côté de grand diamètre (22) est défini en tant que chacune des poches (16) destinée à contenir le rouleau effilé (15), et dans lequel la bague intérieure (11), les rouleaux effilés (15) et la cage (17) sont réunis pour former un ensemble de bague intérieure, qui est incorporé dans la bague extérieure (12),

dans lequel une griffe de guidage (24) est fournie sur un côté de diamètre extérieur de chacune de parties en colonnes (23) adjacentes de chacune des poches (16) afin de de permettre aux rouleaux effilés (15) d'être insérés dans les poches (16) depuis un côté de diamètre intérieur des segments (20), le palier à rouleaux effilés (1) possède un élément de liaison (25) destiné à être disposé en forme de bague sur une surface latérale du côté de grand diamètre de chacun des segments (20), et une partie de mise en prise (27) destinée à venir en prise de façon amovible avec l'élément de liaison (25) est fournie sur la surface latérale du côté de grand diamètre de la partie en forme d'arc du côté de grand diamètre (22) de chacun des segments (20) afin de relier les segments (20),
**caractérisé en ce que**
dans un état dans lequel des segments (20) adjacents sont aboutés et fixés par liaison de l'élément de liaison (25), quand on désigne par M un diamètre de la petite partie d'épaulement (18) de la bague intérieure (11), par L un angle de la petite partie d'épaulement (18) de la bague intérieure (11) qui est en contact avec une surface d'extrémité d'un rouleau effilé (15) du côté de petit diamètre par rapport à une droite perpendiculaire à un axe central de la bague intérieure (11), par K une largeur biseautée d'un bord avant de la petite partie d'épaulement (18), et par y3 une distance, à l'axe central, depuis un point de contact C au niveau duquel une surface latérale de la petite partie d'épaulement (18) entre en contact avec une surface d'extrémité du rouleau effilé (15) sur le côté de petit diamètre lorsque l'on fait tourner le rouleau effilé (15) autour d'un bord avant de la grande partie d'épaulement (H) de la bague intérieure (11), la condition ci-dessous est satisfaite.

$$(M/2) - K \cos L > y3$$

2. Palier à rouleaux effilés (1) selon la revendication 1, dans lequel les extrémités de l'élément de liaison (25) sont reliées ensemble par une partie de fixation ou un élément de fixation (30).

3. Palier à rouleaux effilés (1) selon la revendication 1 ou 2, dans lequel une partie oreille (28) qui fait saillie sur un côté de petit diamètre est fournie sur une surface latérale du côté de petit diamètre de la partie en forme d'arc du côté de petit diamètre (21), de sorte que lorsque les segments (20) disposés suivant une forme annulaire doivent être reliés sur un côté de grand diamètre par l'élément de liaison (25), un gabarit en forme de bague (31) est ajusté sur la partie oreille (28) du côté de petit diamètre des segments (20) disposés suivant une forme annulaire.

4. Palier à rouleaux effilés (1) selon l'une quelconque des revendications 1 à 3, dans lequel des parties saillantes (26) avec la partie de mise en prise (27) sont fournies sur des côtés d'extrémité opposés de la surface latérale du côté de grand diamètre de la partie en forme d'arc du côté de grand diamètre (22) de chacun des segments (20).

5. Palier à rouleaux effilés (1) selon l'une quelconque des revendications 1 à 4, où dans un état dans lequel un rouleau effilé (15) est disposé sur la surface de roulement (14) de la bague intérieure (11) avec une grande surface d'extrémité de la bague intérieure (11) orientée vers le bas, quand on désigne par I un angle de la grande partie d'épaulement (19) de la bague intérieure (11) qui est en contact avec une surface d'extrémité du rouleau effilé (15) sur le côté de grand diamètre par rapport à une droite perpendiculaire à un axe central de la bague intérieure (11), par H une largeur biseautée d'un bord avant de la grande partie d'épaulement (19), par y1 une distance de l'axe central de la bague intérieure (11) à un centre de gravité du rouleau effilé (15) et par J un diamètre de la grande partie d'épaulement (19), la condition ci-dessous est satisfaite.

$$(J/2) -H \cos I > y1$$

6. Palier à rouleaux effilés (1) selon l'une quelconque des revendications 1 à 5, dans lequel les segments (20) sont en résine.

7. Palier à rouleaux effilés (1) selon la revendication 6, dans lequel la résine qui forme le segment (20) est une polyéther éther cétone contenant des fibres de carbone ou une polyéther éther cétone contenant des fibres de verre.

8. Palier à rouleaux effilés (1) selon la revendication 2, dans lequel l'élément de liaison (25) est divisé en une pluralité d'éléments de liaison (25), et les extrémités de chacun des éléments de liaison (25) divisés sont respectivement reliées ensemble par les parties de fixation ou les éléments de fixation (30).

9. Palier à rouleaux effilés (1) selon la revendication 8, dans lequel une pluralité des parties de fixation ou des éléments de fixation (30) sont disposés de manière régulière le long de la circonférence.

10. Palier à rouleaux effilés (1) selon l'une quelconque des revendications 1 à 9, dans lequel un élément de liaison du côté de petit diamètre et une partie de mise en prise du côté de petit diamètre (32) avec l'élément de liaison du côté de petit diamètre sont fournis sur la surface latérale du côté de petit diamètre de la partie en forme d'arc du côté de petit diamètre (21), et les segments (20) disposés en forme de bague sont reliés en mettant en prise de manière amovible l'élément de liaison du côté de petit diamètre avec la partie de mise en prise du côté de premier diamètre (32).

FIG. 1

FIG. 2

FIG. 3

FIG. 4

FIG. 5

FIG. 6

FIG. 7

FIG. 8

FIG. 9

FIG.10

FIG.11

FIG.12

FIG.13

FIG.14

FIG.15

FIG.16

FIG.17

FIG.18

FIG.19

FIG.20

**EP 4 343 163 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5010353 B
- JP 2014020393 A
- JP 5702534 B
- JP 2018080747 A
- US 2016010690 A1
- US 9217470 B2